# FASCICULE DE BREVET EUROPEEN

(11) **EP 3 696 088 B1**
(45) Date de publication et mention de la délivrance du brevet: **17.11.2021**
(21) Numéro de dépôt: 20156381.4
(22) Date de dépôt: 10.02.2020
(51) Int. Cl.: B64D 27/10, B64D 27/16, B64D 29/00, F02K 1/72

(54) **NACELLE D'UN TURBOREACTEUR COMPORTANT UNE PORTE DE BLOCAGE ET UN SYSTEME DE DEPLOIEMENT DE LA PORTE DE BLOCAGE**
GONDEL EINES TURBOREAKTORS, DIE EINE BLOCKIERTÜR UND EIN SYSTEM ZUM EINSATZ EINER SOLCHEN BLOCKIERTÜR UMFASST
TURBOJET NACELLE COMPRISING A LOCKING DOOR AND A SYSTEM FOR THE DEPLOYMENT OF THE LOCKING DOOR

(30) Priorité: 15.02.2019 FR 1901568
(43) Date de publication de la demande: 19.08.2020
(73) Titulaire: AIRBUS OPERATIONS, 31060 Toulouse Cedex 9 (FR)
(72) Inventeur: CAZEAUX, Laurent, 31170 TOURNEFEUILLE (FR)
(74) Mandataire: Cabinet Le Guen Maillet

(56) Documents cités:
- EP-A1- 3 018 329
- EP-A1- 3 309 380
- FR-A1- 2 934 326
- FR-A1- 2 960 600
- US-A1- 2017 016 413

## Description

### DOMAINE TECHNIQUE

La présente invention concerne une nacelle d'un turboréacteur double flux qui comporte au moins une porte de blocage et un système de déploiement, un turboréacteur double flux comportant une telle nacelle et un moteur, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur, une nacelle qui est fixée autour du moteur et une veine secondaire qui est entre le moteur et la nacelle et qui permet le passage d'un flux secondaire.

La nacelle comporte un capot fixe et un capot mobile à l'arrière du capot fixe et mobile en translation entre une position de fermeture et une position d'ouverture. En position de fermeture, le capot mobile est rapproché du capot fixe et forme une continuité aérodynamique. En position d'ouverture, le capot mobile est éloigné du capot fixe vers l'arrière, et ouvre une ouverture entre la veine secondaire et l'extérieur.

La nacelle comporte également au moins une porte de blocage qui est mobile entre une position escamotée dans laquelle elle est positionnée en dehors de la veine secondaire de manière à ne pas faire obstacle au flux secondaire, et une position déployée dans laquelle elle est positionnée en travers de la veine secondaire de manière à faire obstacle au flux secondaire pour le diriger radialement à travers l'ouverture vers l'extérieur de la nacelle.

Classiquement, la porte de blocage est montée mobile en rotation sur la structure de la nacelle et un système de déploiement vient la déplacer de la position escamotée à la position déployée lorsque le capot mobile passe de la position de fermeture à la position d'ouverture et inversement. Le système de déploiement peut comporter une bielle disposée dans la veine secondaire, ce qui nécessite une découpe de la porte de blocage pour permettre le passage de ladite bielle lors de son déplacement.

Bien que le système de déploiement d'une telle porte de blocage donne entière satisfaction, il est souhaitable de trouver des systèmes de déploiement différents et en particulier un système de déploiement qui soit moins encombrant et qui ne comporte pas de bielle dans la veine secondaire afin d'améliorer la performance aérodynamique de l'inversion de poussée.

Le document EP-A-3 309 380 divulgue une nacelle de l'état de la technique.

### EXPOSE DE L'INVENTION

Un objet de la présente invention est de proposer une nacelle comportant au moins une porte de blocage et un système de déploiement.

A cet effet, est proposée une nacelle pour un turboréacteur double flux, ladite nacelle comportant :
- une structure fixe comportant un capot fixe,
- un capot mobile qui est mobile en translation par rapport au capot fixe selon une direction de translation parallèle à un axe longitudinal X entre une position de fermeture dans laquelle il est rapproché du capot fixe et une position d'ouverture dans laquelle il est éloigné du capot fixe vers l'arrière pour définir entre eux une ouverture entre une veine d'un flux secondaire et l'extérieur de la nacelle,
- des moyens moteur destinés à déplacer le capot mobile de la position de fermeture à la position d'ouverture et inversement,
- une porte de blocage montée mobile en rotation autour d'un axe de rotation sur le capot mobile entre une position escamotée dans laquelle elle se positionne en dehors de la veine et une position déployée dans laquelle elle vient en travers de la veine, et
- un système de déploiement prévu pour coordonner le passage de la position escamotée à la position déployée de la porte de blocage avec le passage de la position de fermeture à la position d'ouverture du capot mobile et inversement, la nacelle étant caractérisée en ce que ledit système de déploiement comporte :
- une première bielle comportant une première extrémité et une deuxième extrémité, où sa première extrémité est montée articulée sur la structure fixe par l'intermédiaire d'une liaison pivot autour d'un premier axe d'articulation,
- une deuxième bielle comportant une première extrémité et une deuxième extrémité, où sa première extrémité est montée articulée sur le capot mobile par l'intermédiaire d'une liaison pivot autour d'un deuxième axe d'articulation et où sa deuxième extrémité est montée articulée sur la deuxième extrémité de la première bielle par l'intermédiaire d'une liaison pivot autour d'un troisième axe d'articulation,
- une troisième bielle comportant une première extrémité et une deuxième extrémité, où sa première extrémité est montée articulée sur la deuxième bielle par l'intermédiaire d'une liaison rotule à doigt, et où sa deuxième extrémité est montée articulée sur la porte de blocage par l'intermédiaire d'une liaison rotule à doigt,
où les trois bielles sont disposées en dehors de la veine.

Comme les bielles sont à l'extérieur de la veine, elles ne gênent pas le flux dans la veine et il n'est pas nécessaire de prévoir une découpe dans la porte de blocage ce qui permet d'améliorer son efficacité en inversion de poussée.

Avantageusement, la première bielle et la deuxième bielle sont dans un même plan sensiblement perpendiculaire à une direction radiale par rapport à l'axe longitudinal X.

Avantageusement, chaque liaison rotule à doigt est réalisée par un joint de cardan.

Avantageusement, le capot mobile comporte un étrier en U qui porte un arbre coaxial avec le deuxième axe d'articulation et formant, avec la première extrémité de la deuxième bielle, la liaison pivot, et l'étrier présente deux bras qui s'étendent au-delà du deuxième axe d'articulation pour venir de part et d'autre de la deuxième bielle par rapport au plan dans lequel se déplace la deuxième bielle.

Avantageusement, la structure fixe comporte un étrier en U qui porte un arbre coaxial avec le premier axe d'articulation et formant, avec la première extrémité de la première bielle, la liaison pivot, et l'étrier présente deux bras qui s'étendent au-delà du premier axe d'articulation pour venir de part et d'autre de la première bielle par rapport au plan dans lequel se déplace la première bielle.

L'invention propose également un turboréacteur double flux comportant un moteur et une nacelle selon l'une des variantes précédentes qui entoure le moteur, et où la veine est délimitée entre la nacelle et le moteur.

L'invention propose également un aéronef comportant au moins un turboréacteur double flux selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant une nacelle selon l'invention,
[Fig. 2] est une vue de côté d'une nacelle selon l'invention en position de fermeture et en position escamotée et sans le système de déploiement,
[Fig. 3] est une vue de l'extérieur de la nacelle selon l'invention en position de fermeture et en position escamotée,
[Fig. 4] est une vue similaire à celle de la Fig. 3 en position d'ouverture et en position déployée, et
[Fig. 5] est une vue selon la direction V de la Fig. 4 d'un détail de fixation.

### EXPOSE DETAILLE DE MODES DE REALISATION

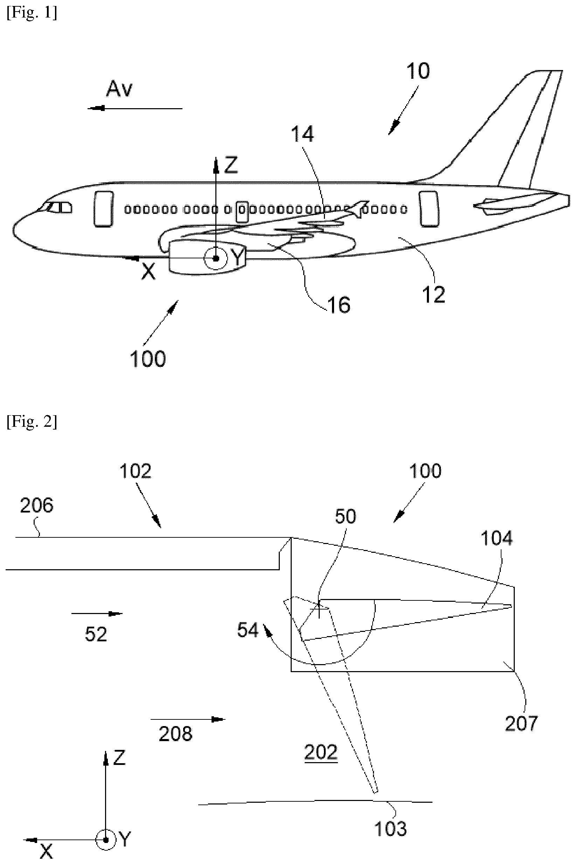

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et qui est orienté positivement dans le sens d'avancement de l'aéronef 10, on appelle Y l'axe transversal du turboréacteur double flux 100 qui est horizontal lorsque l'aéronef est au sol, et Z l'axe vertical lorsque l'aéronef est au sol, ces trois directions X, Y et Z étant orthogonales entre elles. Dans la suite de la description, les termes « avant » et « arrière » sont à considérer relativement au sens de déplacement de l'aéronef 10 qui est matérialisé par une flèche Av sur la Fig. 1.

Les Figs. 2 à 4 montrent le turboréacteur double flux 100 qui comporte une nacelle 102 et un moteur qui est logé à l'intérieur de la nacelle 102. Le turboréacteur double flux 100 présente une veine 202 entre la nacelle 102 et le moteur dans laquelle circule le flux secondaire 208. Le moteur est matérialisé ici par son capotage 103.

La nacelle 102 comporte au moins une porte de blocage 104. En particulier, il peut y avoir deux portes de blocage 104 disposées l'une en face de l'autre, ou quatre portes de blocage 104 réparties régulièrement sur la périphérie de la nacelle 102. Chaque porte de blocage 104 permet selon sa position d'inverser la poussée du turboréacteur double flux 100.

Dans la description qui suit, l'invention est plus particulièrement décrite pour une porte de blocage 104, mais elle s'applique de la même manière pour chaque porte de blocage 104 lorsqu'il y en a plusieurs.

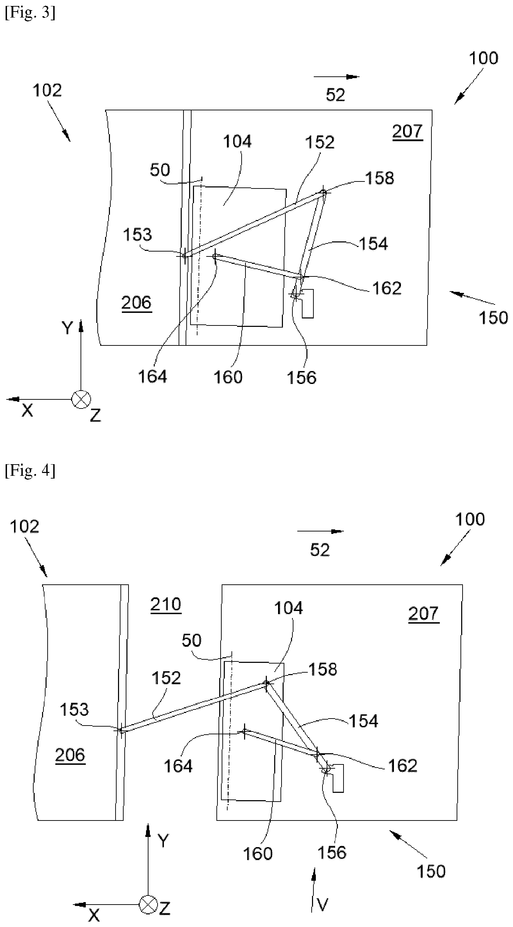

La nacelle 102 présente pour chaque porte de blocage 104, une ouverture 210 (Fig. 4) ouverte entre la veine 202 et l'extérieur de la nacelle 102.

La nacelle 102 présente un capot fixe 206 qui délimite l'ouverture 210 en amont par rapport à l'axe longitudinal X et qui est monté fixe sur une structure fixe de la nacelle 102.

La nacelle 102 présente un capot mobile 207 qui délimite l'ouverture 210 en aval par rapport à l'axe longitudinal X. Le capot mobile 207 est monté mobile en translation selon une direction de translation globalement parallèle à l'axe longitudinal X sur la structure fixe et donc par rapport au capot fixe 206. La translation est réalisée par tous moyens appropriés comme par exemple des glissières.

Le capot fixe 206 et le capot mobile 207 présentent chacun une surface extérieure qui constitue l'enveloppe extérieure de la nacelle 102 et une surface intérieure qui constitue une paroi extérieure de la veine 202. Le capotage 103 du moteur constitue une paroi intérieure de la veine 202.

Le capot mobile 207 est mobile entre une position de fermeture (Fig. 2 et Fig. 3) dans laquelle il est rapproché du capot fixe 206 et une position d'ouverture (Fig. 4) dans laquelle il est éloigné du capot fixe 206 vers l'arrière de manière à élargir l'ouverture 210. Le sens de déplacement de la position de fermeture à la position d'ouverture est représenté par la flèche 52.

La nacelle 102 comporte également des moyens moteur pour déplacer le capot mobile 207 de la position de fermeture à la position d'ouverture et inversement, et ils peuvent comporter, par exemple des vérins, vis à billes, moteurs ou tout autre moyen approprié pour déplacer un élément en translation.

Les moyens moteur sont commandés par une unité de contrôle, du type processeur, qui commande par exemple l'allongement et le raccourcissement des vérins selon les besoins de l'aéronef 10.

La porte de blocage 104 est montée mobile en rotation autour d'un axe de rotation 50 sur le capot mobile 207 entre une position escamotée (Fig. 2 et Fig. 3) et une position déployée (Fig. 4) pour laquelle l'inversion de poussée a une efficacité maximale. Dans le mode de réalisation de l'invention présenté sur les Figs. 2 à 4, l'axe de rotation 50 est perpendiculaire à l'axe longitudinal X. L'axe de rotation 50 est ici au niveau du bord amont de la porte de blocage 104. Le sens de rotation entre la position escamotée et la position déployée est représenté par la flèche 54.

L'axe de rotation 50 est dans un plan sensiblement perpendiculaire à une direction radiale par rapport à l'axe longitudinal X.

En position escamotée, la porte de blocage 104 se positionne en dehors de la veine 202, et plus particulièrement ici à l'intérieur du capot mobile 207 qui est en position de fermeture. En position d'ouverture, le capot mobile 207 est déplacé vers l'arrière pour faciliter la manœuvre de la porte de blocage 104 qui passe de la position escamotée à la position déployée.

Lorsque la porte de blocage 104 est en position déployée, la porte de blocage 104 vient en travers de la veine 202 et dévie au moins une partie du flux secondaire 208 vers l'extérieur à travers l'ouverture 210. En position déployée, le bord libre de la porte de blocage 104 se rapproche du capotage 103 du moteur. Sur la Fig. 4, la porte de blocage 104 est abaissée en position déployée correspondant à la position en pointillés de la Fig. 2.

Le passage de la position escamotée à la position déployée de la porte de blocage 104 est coordonné au passage de la position de fermeture à la position d'ouverture du capot mobile 207 et inversement.

Cette coordination est assurée par un système de déploiement 150 qui comporte :
- une première bielle 152 comportant une première extrémité et une deuxième extrémité, où sa première extrémité est montée articulée sur la structure fixe, ici le capot fixe 206, par l'intermédiaire d'une liaison pivot autour d'un premier axe d'articulation 153,
- une deuxième bielle 154 comportant une première extrémité et une deuxième extrémité, où sa première extrémité est montée articulée sur le capot mobile 207 par l'intermédiaire d'une liaison pivot autour d'un deuxième axe d'articulation 156 et où sa deuxième extrémité est montée articulée sur la deuxième extrémité de la première bielle 152 par l'intermédiaire d'une liaison pivot autour d'un troisième axe d'articulation 158,
- une troisième bielle 160 comportant une première extrémité et une deuxième extrémité, où sa première extrémité est montée articulée sur la deuxième bielle 154, ici entre les deux extrémités de ladite deuxième bielle 154, par l'intermédiaire d'une liaison rotule à doigt 162, et où sa deuxième extrémité est montée articulée sur la porte de blocage 104 par l'intermédiaire d'une liaison rotule à doigt 164.

Les trois axes d'articulation 153, 156, 158 sont parallèles entre eux.

Les trois bielles 152, 154 et 160 sont disposées en dehors de la veine 202 et n'interfèrent donc pas avec le flux secondaire 208 de la veine 202.

Comme les bielles 152, 154 et 160 sont à l'extérieur de la veine 202, elles ne gênent pas le flux secondaire 208 et il n'est pas nécessaire de prévoir une découpe dans la porte de blocage 104, ce qui permet d'améliorer son efficacité en inversion de poussée.

La première bielle 152 et la deuxième bielle 154 sont dans un même plan sensiblement perpendiculaire à une direction radiale par rapport à l'axe longitudinal X.

Lorsque le capot mobile 207 se déplace de la position de fermeture à la position d'ouverture, la deuxième bielle 154 se déplace du fait qu'elle est en liaison avec la première bielle 152 dont une extrémité est fixe. Ce déplacement de la deuxième bielle 154 entraîne également le déplacement de la troisième bielle 160 qui pousse la porte de blocage 104 et la déplace vers sa position déployée.

A l'inverse lorsque le capot mobile 207 se déplace de la position d'ouverture à la position de fermeture, le déplacement de la deuxième bielle 154 entraîne le déplacement de la troisième bielle 160 qui tire sur la porte de blocage 104 et la déplace vers sa position escamotée.

Lorsque le capot mobile 207 se déplace de la position de fermeture à la position d'ouverture, la première bielle 152 décrit une trajectoire de rotation autour du premier axe d'articulation 153, et la deuxième bielle 154 décrit une trajectoire de rotation autour du deuxième axe d'articulation 156 ainsi qu'une translation vers l'arrière de la nacelle 102 et inversement lorsque le capot mobile 207 se déplace en sens inverse. La première bielle 152 et la deuxième bielle 154 se déplacent dans un même plan.

Chaque liaison rotule à doigt 162, 164 est réalisée par exemple par un joint de cardan.

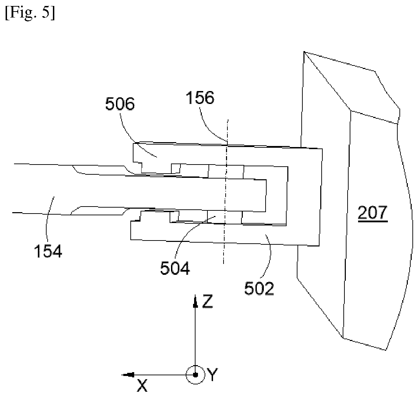

La Fig. 5 montre un détail de réalisation qui permet de guider et maintenir la bielle 152, 154 dans son plan lors de son déplacement. La Fig. 5 montre plus particulièrement la liaison pivot entre la première extrémité de la deuxième bielle 154 et le capot mobile 207, mais elle s'applique de la même manière pour la liaison pivot entre la première extrémité de la première bielle 152 et le capot fixe 206 en remplaçant la deuxième bielle 154 par la première bielle 152 et le capot mobile 207 par le capot fixe 206.

Le capot mobile 207 comporte un étrier 502 en U qui porte un arbre 504 coaxial avec le deuxième axe d'articulation 156 et formant, avec la première extrémité de la deuxième bielle 154, la liaison pivot.

L'étrier 502 présente deux bras 506 qui s'étendent au-delà du deuxième axe d'articulation 156 pour venir de part et d'autre de la deuxième bielle 154 par rapport au plan dans lequel se déplace la deuxième bielle 154 et ainsi la prendre en sandwich afin de la guider lors de ses déplacements.

Dans le cas de la liaison entre la structure fixe et la première bielle 152, la structure fixe, ici le capot fixe 206, comporte un étrier en U qui porte un arbre coaxial avec le premier axe d'articulation 153 et, formant avec la première extrémité de la première bielle 152, la liaison pivot, et l'étrier présente deux bras qui s'étendent au-delà du premier axe d'articulation 153 pour venir de part et d'autre de la première bielle 152 par rapport au plan dans lequel se déplace la première bielle 152.

## Revendications

1. Nacelle (102) pour un turboréacteur double flux (100), ladite nacelle (102) comportant
- une structure fixe comportant un capot fixe (206),
- un capot mobile (207) qui est mobile en translation par rapport au capot fixe (206) selon une direction de translation parallèle à un axe longitudinal X entre une position de fermeture dans laquelle il est rapproché du capot fixe (206) et une position d'ouverture dans laquelle il est éloigné du capot fixe (206) vers l'arrière pour définir entre eux une ouverture (210) entre une veine (202) d'un flux secondaire (208) et l'extérieur de la nacelle (102),
- des moyens moteur destinés à déplacer le capot mobile (207) de la position de fermeture à la position d'ouverture et inversement,
- une porte de blocage (104) montée mobile en rotation autour d'un axe de rotation (50) sur le capot mobile (207) entre une position escamotée dans laquelle elle se positionne en dehors de la veine (202) et une position déployée dans laquelle elle vient en travers de la veine (202), et
- un système de déploiement (150) prévu pour coordonner le passage de la position escamotée à la position déployée de la porte de blocage (104) avec le passage de la position de fermeture à la position d'ouverture du capot mobile (207) et inversement, la nacelle (102) étant **caractérisée en ce que** ledit système de déploiement (150) comporte :
- une première bielle (152) comportant une première extrémité et une deuxième extrémité, où sa première extrémité est montée articulée sur la structure fixe par l'intermédiaire d'une liaison pivot autour d'un premier axe d'articulation (153),
- une deuxième bielle (154) comportant une première extrémité et une deuxième extrémité, où sa première extrémité est montée articulée sur le capot mobile (207) par l'intermédiaire d'une liaison pivot autour d'un deuxième axe d'articulation (156) et où sa deuxième extrémité est montée articulée sur la deuxième extrémité de la première bielle (152) par l'intermédiaire d'une liaison pivot autour d'un troisième axe d'articulation (158),
- une troisième bielle (160) comportant une première extrémité et une deuxième extrémité, où sa première extrémité est montée articulée sur la deuxième bielle (154) par l'intermédiaire d'une liaison rotule à doigt (162), et où sa deuxième extrémité est montée articulée sur la porte de blocage (104) par l'intermédiaire d'une liaison rotule à doigt (164), où les trois bielles (152, 154, 160) sont disposées en dehors de la veine (202).

2. Nacelle (102) selon la revendication 1, **caractérisée en ce que** la première bielle (152) et la deuxième bielle (154) sont dans un même plan sensiblement perpendiculaire à une direction radiale par rapport à l'axe longitudinal X.

3. Nacelle (102) selon l'une des revendications 1 ou 2, **caractérisée en ce que** chaque liaison rotule à doigt (162, 164) est réalisée par un joint de cardan.

4. Nacelle (102) selon l'une des revendications 1 à 3, **caractérisée en ce que** le capot mobile (207) comporte un étrier (502) en U qui porte un arbre (504) coaxial avec le deuxième axe d'articulation (156) et formant, avec la première extrémité de la deuxième bielle (154), la liaison pivot, et **en ce que** l'étrier (502) présente deux bras (506) qui s'étendent au-delà du deuxième axe d'articulation (156) pour venir de part et d'autre de la deuxième bielle (154) par rapport au plan dans lequel se déplace la deuxième bielle (154).

5. Nacelle (102) selon l'une des revendications 1 à 4, **caractérisée en ce que** la structure fixe comporte un étrier en U qui porte un arbre coaxial avec le premier axe d'articulation (153) et, formant avec la première extrémité de la première bielle (152), la liaison pivot, et **en ce que** l'étrier présente deux bras qui s'étendent au-delà du premier axe d'articulation (153) pour venir de part et d'autre de la première bielle (152) par rapport au plan dans lequel se déplace la première bielle (152).

6. Turboréacteur double flux (100) comportant un moteur et une nacelle (102) selon l'une des revendications précédentes qui entoure le moteur, et où la veine (202) est délimitée entre la nacelle (102) et le moteur.

7. Aéronef (10) comportant au moins un turboréacteur double flux (100) selon la revendication précédente.

## Patentansprüche

1. Gondel (102) für ein Zweistrom-Turbinenstrahltriebwerk (100), wobei die Gondel (102) Folgendes aufweist:
- eine feste Struktur, die eine feste Abdeckung (206) aufweist,
- eine bewegliche Abdeckung (207), die relativ zur festen Abdeckung (206) in einer Translationsrichtung parallel zu einer Längsachse X zwischen einer geschlossenen Stellung, in der sie an die feste Abdeckung (206) angenähert ist, und einer geöffneten Stellung, in der sie von der festen Abdeckung (206) nach hinten beabstandet ist, um dazwischen eine Öffnung (210) zwischen einer Bahn (202) eines Sekundärstroms (208) und dem Äußeren der Gondel (102) zu definieren, translatorisch verschiebbar ist,
- eine Antriebseinrichtung, die dazu bestimmt ist, die bewegliche Abdeckung (207) aus der geschlossenen Stellung in die geöffnete Stellung und umgekehrt zu verschieben,
- eine Sperrtür (104), die um eine Drehachse (50) an der beweglichen Abdeckung (207) zwischen einer eingefahrenen Stellung, in der sie außerhalb der Bahn (202) positioniert ist, und einer ausgefahrenen Stellung, in der sie quer zur Bahn (202) verläuft, drehbar montiert ist, und
- ein Ausfahrsystem (150), das dazu vorgesehen ist, den Übergang der Sperrtür (104) aus der eingefahrenen Stellung in die ausgefahrene Stellung mit dem Übergang der beweglichen Abdeckung (207) aus der geschlossenen Stellung in die geöffnete Stellung und umgekehrt zu koordinieren, wobei die Gondel (102) **dadurch gekennzeichnet ist, dass** das Ausfahrsystem (150) Folgendes aufweist:
- eine erste Verbindungsstange (152), die ein erstes Ende und ein zweites Ende aufweist, wobei ihr erstes Ende über eine Schwenkverbindung um die erste Gelenkachse (153) an der festen Struktur angelenkt ist,
- eine zweite Verbindungsstange (154), die ein erstes Ende und ein zweites Ende aufweist, wobei ihr erstes Ende über eine Schwenkverbindung um eine zweite Gelenkachse (156) an der beweglichen Abdeckung (207) angelenkt ist und wobei ihr zweites Ende über eine Schwenkverbindung um eine dritte Gelenkachse (158) am zweiten Ende der ersten Verbindungsstange (152) angelenkt ist,
- eine dritte Verbindungsstange (160), die ein erstes Ende und ein zweites Ende aufweist, wobei ihr erstes Ende über eine Kugelgelenkverbindung (162) an der zweiten Verbindungsstange (154) angelenkt ist und wobei ihr zweites Ende über eine Kugelgelenkverbindung (164) an der Sperrtür (104) angelenkt ist,
wobei die drei Verbindungsstangen (152, 154, 160) außerhalb der Bahn (202) angeordnet sind.

2. Gondel (102) nach Anspruch 1, **dadurch gekennzeichnet, dass** die erste Verbindungsstange (152) und die zweite Verbindungsstange (154) in derselben Ebene liegen, die im Wesentlichen senkrecht zu einer radialen Richtung relativ zur Längsachse X ist.

3. Gondel (102) nach einem der Ansprüche 1 oder 2, **dadurch gekennzeichnet, dass** jede Kugelgelenkverbindung (162, 164) durch ein Kardangelenk ausgeführt ist.

4. Gondel (102) nach einem der Ansprüche 1 bis 3, **dadurch gekennzeichnet, dass** die bewegliche Abdeckung (207) einen U-förmigen Bügel (502) aufweist, der eine mit der zweiten Gelenkachse (156) koaxiale Welle (504) trägt und mit dem ersten Ende der zweiten Verbindungsstange (154) die Schwenkverbindung ausbildet, und dass der Bügel (502) zwei Arme (506) aufweist, die sich über die zweite Gelenkachse (156) hinaus erstrecken, um relativ zur Ebene, in der sich die zweite Verbindungsstange (154) bewegt, auf beide Seiten der zweiten Verbindungsstange (154) zu gelangen.

5. Gondel (102) nach einem der Ansprüche 1 bis 4, **dadurch gekennzeichnet, dass** die feste Struktur einen U-förmigen Bügel aufweist, der eine mit der ersten Gelenkachse (153) koaxiale Welle trägt und mit dem ersten Ende der ersten Verbindungsstange (152) die Schwenkverbindung ausbildet, und dass der Bügel zwei Arme aufweist, die sich über die erste Gelenkachse (153) hinaus erstrecken, um relativ zur Ebene, in der sich die erste Verbindungsstange (152) bewegt, auf beide Seiten der ersten Verbindungsstange (152) zu gelangen.

6. Zweistrom-Turbinenstrahltriebwerk (100) mit einem Antrieb und einer Gondel (102) nach einem der vorangehenden Ansprüche, die den Antrieb umgibt, wobei die Bahn (202) zwischen der Gondel (102) und dem Antrieb begrenzt ist.

7. Luftfahrzeug (10) mit zumindest einem Zweistrom-Turbinenstrahltriebwerk (100) nach dem vorangehenden Anspruch.

## Claims

1. Nacelle (102) for a turbofan (100), said nacelle (102) having:
- a fixed structure having a fixed cowl (206),
- a mobile cowl (207) that is able to move in translation with respect to the fixed cowl (206) in a direction of translation parallel to a longitudinal axis X between a closed position in which it is moved close to the fixed cowl (206) and an open position in which it is moved away from the fixed cowl (206) towards the rear, so as to define between them an opening (210) between a duct (202) for a bypass flow (208) and the exterior of the nacelle (102),
- motive means intended to move the mobile cowl (207) from the closed position to the open position and vice versa,
- a blocking door (104) mounted so as to be able to move in rotation about an axis of rotation (50) on the mobile cowl (207) between a stowed position in which it is positioned outside the duct (202) and a deployed position in which it is moved across the duct (202), and
- a deployment system (150) provided so as to coordinate the movement of the blocking door (104) from the stowed position to the deployed position with the movement of the mobile cowl (207) from the closed position to the open position and vice versa, the nacelle (102) being **characterized in that** said deployment system (150) has:
- a first rod (152) having a first end and a second end, wherein its first end is mounted so as to be articulated on the fixed structure via a pivot connection about a first axis of articulation (153),
- a second rod (154) having a first end and a second end, wherein its first end is mounted so as to be articulated on the mobile cowl (207) via a pivot connection about a second axis of articulation (156) and wherein its second end is mounted so as to be articulated on the second end of the first rod (152) via a pivot connection about a third axis of articulation (158),
- a third rod (160) having a first end and a second end, wherein its first end is mounted so as to be articulated on the second rod (154) via a pegged ball joint connection (162), and wherein its second end is mounted so as to be articulated on the blocking door (104) via a pegged ball joint connection (164),
wherein the three rods (152, 154, 160) are disposed outside the duct (202).

2. Nacelle (102) according to Claim 1, **characterized in that** the first rod (152) and the second rod (154) are in a single plane substantially perpendicular to a radial direction with respect to the longitudinal axis X.

3. Nacelle (102) according to either of Claims 1 and 2, **characterized in that** each pegged ball joint connection (162, 164) is realized by a universal joint.

4. Nacelle (102) according to one of Claims 1 to 3, **characterized in that** the mobile cowl (207) has a U-shaped stirrup (502) that bears a shaft (504) coaxial with the second axis of articulation (156) and forming, with the first end of the second rod (154), the pivot connection, and **in that** the stirrup (502) has two arms (506) that extend beyond the second axis of articulation (156) so as to be on either side of the second rod (154) with respect to the plane in which the second rod (154) moves.

5. Nacelle (102) according to one of Claims 1 to 4, **characterized in that** the fixed structure has a U-shaped stirrup that bears a shaft coaxial with the first axis of articulation (153) and forming, with the first end of the first rod (152), the pivot connection, and **in that** the stirrup has two arms that extend beyond the first axis of articulation (153) so as to be on either side of the first rod (152) with respect to the plane in which the first rod (152) moves.

6. Turbofan (100) having an engine and a nacelle (102) according to one of the preceding claims that surrounds the engine, and wherein the duct (202) is delimited between the nacelle (102) and the engine.

7. Aircraft (10) having at least one turbofan (100) according to the preceding claim.
